# EUROPEAN PATENT APPLICATION

(11) **EP 4 667 214 A1**
(43) Date of publication of application: **24.12.2025**
(21) Application number: 24756795.1
(22) Date of filing: 08.02.2024
(51) Int. Cl.: B32B 7/14, A41D 27/00, A41D 27/06, A41D 31/00, A41D 31/04, A41D 31/18, A41H 43/04, B32B 37/12

(54) **BONDED STRUCTURE OF STRETCHABLE MATERIALS, CLOTHES AND METHOD FOR BONDING STRETCHABLE MATERIALS**

(30) Priority: 14.02.2023 JP 2023020810
(71) Applicant: Resonac Corporation, Tokyo 105-7325 (JP); Toray Industries, Inc., Tokyo 103-8666 (JP)
(72) Inventor: SUMI, Nanako, Tokyo 105-7325 (JP); KOMIYA, Souichirou, Tokyo 105-7325 (JP); YAMATO, Ryosuke, Tokyo 105-7325 (JP); KIKUCHI, Naoyuki, Tokyo 105-7325 (JP); KIDO, Tatsuya, Tokyo 1038666 (JP); OTSUKA, Azuki, Tokyo 1038666 (JP)
(74) Representative: Berggren Oy
(86) International application number: PCT/JP2024/004413
(87) International publication number: WO 2024/171950

(57) **Abstract**

To provide a layer-bonded structure of a stretchable material, a garment, and a method for layer-bonding of a stretchable material, which can decrease stretchability in a predetermined extension direction while reducing an amount of adhesive used when layer-bonding stretchable materials to each other via an adhesive. In a layer-bonded structure of a stretchable material in which stretchable materials are bonded with an adhesion pattern formed with an adhesive, the adhesion pattern is composed of plural adhesion parts in which an adhesive is formed in a dot shape, and the plural adhesion parts have a band shape as a whole by forming an array part arranged in a predetermined extension direction and providing plural rows of the array part.

## Description

### Technical Field

The present disclosure relates to layer-bonded structure of a stretchable material, a garment, and a method for layer-bonding of stretchable material.

### Background Art

In recent years, in garments such as innerwear and sportswear, non-sewn products manufactured by bonding fabrics to each other using an adhesive have attracted attention. In these non-sewn products, the stretchability of an adhesion part is adjusted by layer-bonding a fabric using a stretchable material in a predetermined adhesion pattern.

Patent Document 1 proposes an adhesion pattern in which an adhesion part formed by forming an adhesive in a predetermined shape is continuously and repeatedly provided. In this adhesion pattern, there is a non-adhesion part which is formed as an opening in plan view by the predetermined shape of the adhesion part, and by repeatedly providing the adhesion part and the non-adhesion part in the edge direction of the stretchable material, layer-bonding can be performed without impairing the stretchability of the stretchable material, while securing the adhesive strength.

### Prior Art Documents

[Patent Document 1] Japanese Patent No. 6153544

### Summary of the Invention

### Problem to be Solved by the Invention

Incidentally, as in Japanese Patent No. 6153544, there are the problems that in the case of an adhesion pattern in which an adhesive is continuously applied, the amount of adhesive to be used increases, and that when the product is a garment, the ventilation performance inside and outside the garment is reduced owing to the adhesion part. For this reason, dot-shaped adhesion parts have been discontinuously provided at adhesion points between stretchable materials, and these problems have been solved. However, in the case of discontinuous adhesion patterns, since the stretchability of the material is increased in the non-adhesion part provided between the dots, there is the problem that it is difficult to decrease stretchability in a predetermined extension direction.

The present disclosure has been made in view of the above circumstances, and aims to provide a stretchable material layer-bonded structure, a garment, and a method for layer-bonding of a stretchable material that, in cases in which stretchable materials are bonded to each other via an adhesive, it is possible to decrease stretchability in a predetermined extension direction, while reducing the amount of the adhesive used.

### Means for Solving the Problem

Specific means for achieving the above object are as follows.
<1> Layer-bonded structure of a stretchable material, including stretchable materials bonded together with an adhesion pattern formed by an adhesive, in which the adhesion pattern includes plural adhesion parts in which the adhesive is formed in a dot shape, and
   the plural adhesion parts form an array part arranged along a predetermined extension direction, and plural rows of the array part are provided to form a band-shape as a whole.
<2> The layer-bonded structure of the stretchable material of <1>, in which, in the adhesion pattern, in a predetermined array part among the plural rows of the array part, the plural adhesion parts are disposed more densely, and the ratio of an adhesion area with respect to the predetermined extension direction is larger, than in the other adjacent array parts.
<3> The layer-bonded structure of the stretchable material of <1>, in which, in the adhesion pattern, a predetermined array part among the plural rows of the array part includes a congregated part having a cluster in which a distance between adhesion parts is reduced, and the congregated part is provided repetitively along the predetermined extension direction.
<4> The layer-bonded structure of the stretchable material of <2> or <3>, in which, in the adhesion pattern, in the predetermined array part among the plural rows of the array part, the plural adhesion parts are disposed at different positions along the predetermined extension direction relative to the plural adhesion parts configuring the other adjacent array parts.
<5> A garment provided with the layer-bonded structure of the stretchable material of any one of <1> to <4>, the garment being configured by one or more parts including the stretchable material.
<6> A method for layer-bonding of a stretchable material in which respective stretchable materials are bonded together with an adhesion pattern formed by an adhesive, the method including:
   a step of applying the adhesive to at least one of the respective stretchable materials in an adhesion pattern; and
   a step of affixing and adhering together the respective stretchable materials via the adhesion pattern, wherein:
   the adhesion pattern comprises plural adhesion parts in which the adhesive is formed in a dot shape, and
   the plural adhesion parts form an array part arranged along a predetermined extension
   direction, and plural rows of the array part are provided to form a band-shape as a whole.

### Effects of the Invention

According to the present disclosure, a stretchable material layer-bonded structure is provided that, in cases in which stretchable materials are bonded to each other via an adhesive, it is possible to suppress stretchability in a predetermined extension direction while reducing the amount of the adhesive used.

### BRIEF DESCRIPTION OF DRAWINGS

Fig. 1A is a diagram showing a layer-bonded structure of a fabric according to an embodiment of the present disclosure, and is a plan view showing the layer-bonded structure of the fabric prior to being layer-bonded;
Fig. 1B is a diagram showing the layer-bonded structure of the fabric according to an embodiment of the present disclosure, and is a plan view showing the layer-bonded structure of the fabric after being layer-bonded;
Fig. 2 is a cross-sectional view as viewed in the direction of arrow S in Fig. 1B;
Fig. 3 is a plan view showing examples of adhesion patterns;
Fig. 4 is a distribution diagram of strain generated in the adhesion patterns according to the examples;
Fig. 5 is a plan view showing an example of an adhesion pattern having a congregated part;
Fig. 6A is a plan view showing an example of an adhesion pattern;
Fig. 6B is a plan view showing an example of an adhesion pattern;
Fig. 6C is a plan view showing an example of an adhesion pattern;
Fig. 6D is a plan view showing an example of an adhesion pattern;
Fig. 6E is a plan view showing an example of an adhesion pattern;
Fig. 6F is a plan view showing an example of an adhesion pattern;
Fig. 7A is a plan view showing an example of a garment to which the stretchable material layer-bonded structure according to the present disclosure has been applied; and
Fig. 7B is a plan view showing an example of a garment to which the stretchable material layer-bonded structure according to the present disclosure has been applied.

### DESCRIPTION OF EMBODIMENTS

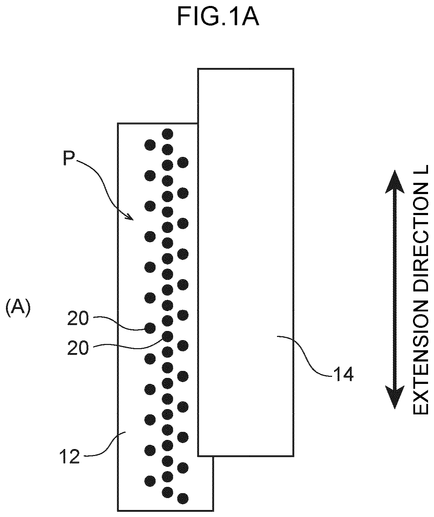

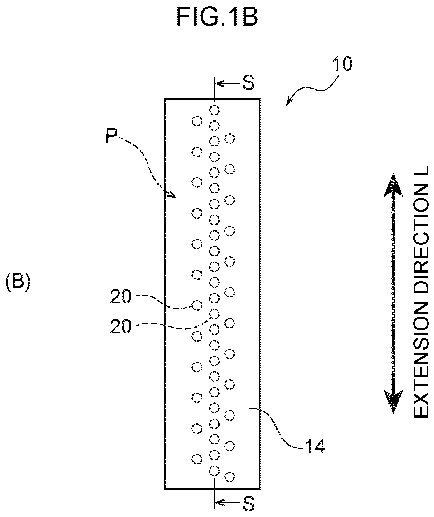

Hereinafter, embodiments of the present disclosure will be described with reference to Figs. 1 to 6F. In the following, as an example of an embodiment relating to the stretchable material layer-bonded structure of the present disclosure, a layer-bonded structure 10 of stretchable fabric (hereinafter, simply referred to as a "layer-bonded structure 10") will be described.

However, the present disclosure is not limited to the following embodiment. In the following embodiment, the constituent components thereof (including element steps, etc.) are not essential unless otherwise specified. The same applies to numerical values and the ranges thereof, and the present disclosure is not limited thereto.

In the present disclosure, the term "step" includes not only a step that is independent of other steps but also a step the purpose of which is achieved even said step cannot be clearly distinguished from other steps.

Note that while the stretchable material is not particularly limited, a material which is sheet-shaped and has stretchability is preferable, and examples include stretchable fabric exemplified in the present embodiment, as well as stretch materials, rubber materials, stretchable films such as polyurethane films, and composites composed of these.

Furthermore, there is no limitation to the same type of stretchable material, and different stretchable materials may be bonded to each other.

The layer-bonded structure 10 of the present embodiment is a layer-bonded structure of a fabric in which stretchable fabric 12 and stretchable fabric 14, which serve as respective stretchable materials, are bonded to each other via an adhesion pattern P formed of an adhesive.

As shown in Fig. 1, the adhesion pattern P is configured by plural adhesion parts 20 in which an adhesive is respectively formed in a dot shape. The stretchable fabric 12 and the stretchable fabric 14 are discontinuously adhered to each other by the plural adhesion parts 20, whereby a non-adhesion part is formed around each adhesion part 20. As a result, the fabrics can be bonded to each other without impairing the original stretchability of the fabric as compared to a linearly continuous adhesion pattern. Furthermore, when a garment is manufactured with plural parts composed of stretchable fabrics 12, 14, deterioration in the ventilation performance inside and outside of the garment caused by the adhesion parts between the fabrics can be decreased. Furthermore, as compared to linearly continuous adhesion patterns, the amount of adhesive used can be reduced, whereby a weight of the product can be reduced.

Note that "dot-shaped" here means a state in which the adhesive is dispersed about to form island shapes. In the drawings of the present embodiment, although each adhesion part 20 is formed in a circular shape in plan view, there is no particular limitation to this, and they may be formed in a triangular shape or a rectangular shape, respectively.

In the adhesion pattern P, the plural adhesion parts 20 form an array part 30 arranged in a predetermined extension direction L, and plural rows of the array part 30 are provided, whereby the array part has a band shape as a whole. When a tensile force along the predetermined extension direction L acts on the stretchable fabric 12 and the stretchable fabric 14, stress in the predetermined extension direction L is increased by the band-shaped adhesion pattern P. As a result, the stretchability of the stretchable fabric 12 and the stretchable fabric 14 in the predetermined stretch direction L can be decreased.

Note that the "predetermined extension direction" is any direction included in directions in which the stretchable fabric 12 and the stretchable fabric 14 have stretchability, regardless of the magnitude of the stretchability.

Furthermore, the adhesion pattern P is not limited to a shape which extends in a straight line on a plane as shown in Fig. 1, and may be a shape which conforms to the surface shape of a part composed of the stretchable fabrics 12, 14. For example, it can be appropriately changed to a bent shape, a curved shape, a meandering shape, or a loop shape in accordance with the shapes of the parts to be bonded.

Furthermore, the adhesion pattern P is not necessarily provided along a contour shape of the part composed of the stretchable fabrics 12, 14. For example, the adhesion pattern P may be provided at a central portion of said part without being close to the contoured portion of the part, and may be formed as an adhesion area between the fabrics.

Furthermore, in Fig. 1, the shape of the stretchable fabric 12 and the stretchable fabric 14 in plan view is rectangular, but the shape is not particularly limited, and any shape of the stretchable fabric can be selected.

As the stretchable fabric of the present embodiment, a knitted fabric having stretchability (a knitted fabric such as a warp knitted fabric, a circular knitted fabric, or a weft knitted fabric), a woven fabric, a nonwoven fabric, or a mesh can be used.

In these stretchable fabrics, the fibers of the fabric may themselves be stretchable, but this is not essential. The fibers of the fabric may themselves have no stretchability. In this case, it is sufficient that the fabrics have stretchability as a fabric resulting from the texture of the fabric constructed by weaving or knitting.

More specifically, examples of a knitted fabric having stretchability include velour, plain cloth (cotton plain cloth, wool plain cloth), circular rib, power net, tricot, and two-way tricot. Examples of a stretchable woven fabric include polyurethane stretchable fibers, mixed fibers containing polyurethane stretchable fibers, and stretchable woven fabrics in which stretchable fibers other than polyurethane stretchable fibers are interlaced.

The stretchable fabric may be a knitted fabric or a woven fabric having stretchability in plural directions, as long as it has stretchability in at least one direction.

In this embodiment, the material of the stretchable fabric 12 and the stretchable fabric 14 is composed of the same type of knitted fabric having stretchability in one direction.

The present invention is not particularly limited to this, and different types of materials (knitted fabric or woven fabric) may be used in combination.

The adhesion pattern P has, as described above, an array part 30 in which plural adhesion parts 20 are arranged in a predetermined extension direction L.

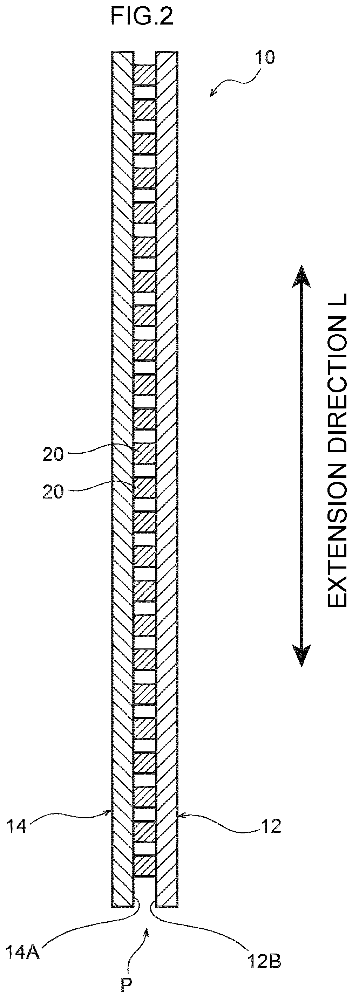

Plural rows of the array part 30 are provided, and have a band shape as a whole. As used herein, "band-shaped" means the shape in plan view of an adhesion part, in which an adhesive is thermally adhered and fixed to the adhesion surface 12A and the adhesion surface 14A (see Fig. 2) of the stretchable fabric 12 and the stretchable fabric 14, respectively.

Note that the adhesive forming the adhesion pattern P can be configured by a hot-melt adhesive, and is preferably configured by a reaction-type hot-melt adhesive. Reaction-type hot-melt adhesives are suitable in terms of improving heat resistance and adhesive strength because they form three-dimensional cross-linked structures as a result of moisture, light, etc.

Here, the inventors have prepared plural types of adhesion pattern P which form a band as a whole by plural adhesion parts 20 arranged in a dot shape, and have observed the stretchability of the fabric bonded by each pattern.

It has been found that by incorporating predetermined regularity into the arrangement method of the adhesion part 20, the stretchability of the fabric can be decreased. Hereinafter, details of examples will be explained.

### <Explanation of Examples>

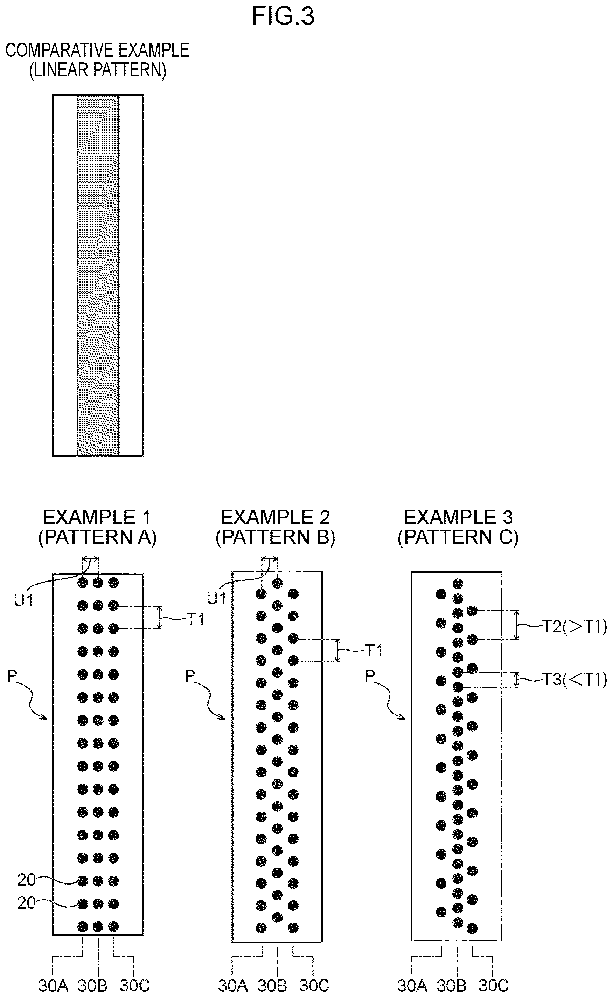

In the examples, the stretchability of the fabric was observed for four adhesion patterns. Fig. 3 shows the adhesion patterns used for observation. In the examples, each adhesion pattern is formed by a moisture curable hot melt adhesive comprising a urethane prepolymer.

Each adhesion pattern is applied to a fabric using an application apparatus such as a dispenser, and then the fabric is heat-pressed in a state in which the fabrics are superimposed on each other, whereby the adhesive is cured. Accordingly, a layer-bonded structure of stretchable fabric is formed via a step of applying an adhesive to at least one stretchable material of the stretchable materials in an adhesion pattern, and a step of affixing the stretchable materials to each other via the adhesion pattern and thermally bonding them to each other.

As shown in Fig. 3, an adhesion pattern according to a comparative example is formed by linearly and continuously applying an adhesive in a predetermined extension direction L. In this comparative example, the adhesion area between the stretchable fabrics (which approximates to the application area of the adhesive) is set to 546 mm².

Adhesion patterns A to C of Examples 1 to 3 are explained. Each adhesion pattern is formed by plural adhesion parts 20 formed in a circular dot shape by application of an adhesive. Adhesion parts 20 having a common shape and area are used for each adhesion pattern, and the number of adhesion parts 20 arranged in a predetermined length in the extension direction L (i.e., the adhesion area) is also alike.

The adhesion pattern A according to Example 1 is an example of the adhesion pattern P according to the present embodiment, and is used as an adhesion pattern serving as an observation reference. In this adhesion pattern A, three array parts 30(A to C) are arranged at predetermined intervals U1 in a width direction of the adhesion pattern P extending in a band shape. Furthermore, in each array part 30, plural adhesion parts 20 are arranged at predetermined intervals T1 provided along a predetermined extension direction L (extension direction of the adhesion pattern P). In each array part 30, since the positions along the extension direction of the adhesion part 20 are similar, the adhesion parts 20 of each array part 30 are arranged side-by-side along the width direction of the adhesion pattern P.

The adhesion pattern B according to Example 2 is an example of the adhesion pattern P according to the present embodiment, and as in Example 1, three array parts 30(A to C) are arranged at a predetermined interval U1 in a width direction of the adhesion pattern P. Furthermore, in each array part 30, plural adhesion parts 20 are arranged at predetermined intervals T1 along a predetermined extension direction L. However, in the adhesion pattern B, in a central array part 30B, plural adhesion parts 20 are arranged so that their positions along the predetermined extension direction L are different from those of the adhesion parts 20 configuring the adjacent left and right array parts 30A, 30C. In other words, along the width direction of the adhesion pattern P, the non-adhesion parts of the left and right array parts 30 are arranged next to the adhesion part 20 configuring the central array part 30.

The adhesion pattern C according to Example 3 is an example of the adhesion pattern P according to the present embodiment, and as in Example 1, three array parts 30 are arranged at a predetermined interval U1 in a width direction of the adhesion pattern P extending in a band shape. Furthermore, in the illustrated example, in the array parts 30A and 30C configuring the left and right sides, plural adhesion parts 20 are arranged at a predetermined interval T2 (>T1) along the predetermined extension direction L. On the other hand, in the central array part 30B, the plural adhesion parts 20 are arranged at a predetermined interval T3 (<T1) along the predetermined extension direction L. In other words, in the adhesion pattern C, the adhesion parts 20 are sparsely arranged in the array parts 30A, 30C configuring the left and right sides, while in the central array part 30B, the adhesion parts 20 are arranged more densely than in the adjacent left and right array parts 30A, 30C, and therefore, in the central array part 30B, a ratio of the adhesion area to the predetermined extension direction L is greater than the ratios in the other array parts 30A, 30C.

Furthermore, in the adhesion pattern C, the adhesion parts 20 configuring the left and right array parts 30A, 30C are arranged so that their positions along the predetermined extension direction L are different from those of the adhesion parts 20 configuring the adjacent central array part 30B. Specifically, the adhesion pattern C according to Example 3 also has the similar regularity to the adhesion pattern B according to Example 2.

Note that, in Example 3, the interval T3 between the adhesion parts 20 of the central array part 30B is configured to be smaller than T1 (T3<T1); however, it is sufficient that the interval T3 is a smaller value than T2 (T3<T2). However, in comparison of the respective examples, in order to enhance the mechanism of decreasing stretchability, it is more preferable that the interval T3 is a value smaller than T1.

The following Table 1 shows the relation between an adhesion area (mm²) between the stretchable fabrics due to the adhesive and an extension amount (mm) when a predetermined tensile force is exerted on the comparative example and Examples 1 to 3.

In the observation examples shown in this table, after applying the adhesion patterns of the comparative example and Examples 1 to 3 to the stretchable fabric 12 formed in an elongated band shape along the predetermined extension direction L, the stretchable fabric 14 was affixed and bonded, and the fabrics were thermally adhered to each other to form a layer-bonded structure. In this state, end portions on one side of the fabrics 12 and 14 of the comparative example and each example are fixed, and a tensile load having a magnitude of F=14.7 N was applied to an end portion at the other side along the predetermined extension direction L.

**Table 1**

| | COMPARATIVE EXAMPLE | PATTERN A | PATTERN B | PATTERN C |
|---|---|---|---|---|
| ADHESION AREA (mm²) | 546 | 302 | 302 | 302 |
| (RATIO OF ADHESION AREA (%)) | +80 | - | 0 | 0 |
| EXTENSION AMOUNT (mm) | 39.4 | 84.4 | 84.5 | 83.8 |
| (RATIO OF EXTENSION AMOUNT (%)) | -45 | - | 0 | -7 |

As shown in Table 1, in the adhesion pattern according to the comparative example, the amount of extension (mm) has a decreased value of about -45% as compared to the adhesion pattern A, which is the reference for stretchability, and it can be seen that the stretchability is the lowest. On the other hand, the adhesion area of the comparative example is 546 mm², which is an increase of about 80% with respect to the adhesion area of 302 mm² of Examples 1 to 3. For this reason, it is assumed that the amount of the adhesive used is 1.8 times greater than that of Examples 1 to 3.

On the other hand, in Examples 1 to 3, while the extension amounts (mm) of Examples 1 and 2 are similar, the extension amount (mm) of Example 3 had a decreased value of -7% with respect to Examples 1 and 2.

In Example 3, the adhesion area (302 mm²) was similar to that of Examples 1 and 2, and the stretchability was different even though there was no substantial difference in the amount of adhesive used. To investigate the causes of this, the inventors analyzed the distribution of strain generated in the adhesion patterns A to C.

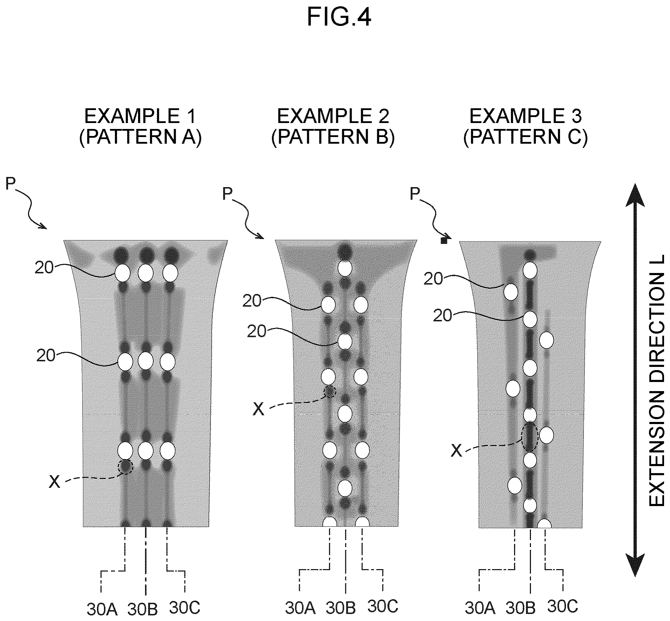

Fig. 4 shows distribution diagrams of the strain generated in the adhesion patterns A to C when a tensile load having a size of F=14.7 N is applied along the predetermined extension direction L. In the distribution diagrams, the portions shown in a dark color around the adhesion parts 20 have a greater strain (amount of extension) than before applying the tensile load. In Fig. 4, locations having particularly large strain are indicated as a region X surrounded by a broken line.

As shown in this drawing, in the adhesion pattern A, it can be seen that, in each adhesion part 20, the strain is greatest at portions on either side in the extension direction L. In this way, in the region (region X) in which the strain becomes large, the stress relative to extension is increased; however, in accordance with the extension of the fabric, since a distance between the adhesion parts 20 in the respective array parts 30(A to C) becomes longer, there is no continuity in concentration point of the strain, which is dispersed.

Similarly for the adhesion pattern B, it can be seen that, in each adhesion part 20, the strain is greatest at the portions on either side in the extension direction L (region X). Furthermore, in the adhesion pattern B, since the distance between the adhesion parts 20 in each array part 30 becomes longer in accordance with the extension of the fabric, the points of concentration of strain are dispersed.

On the other hand, in the adhesion pattern C, it can be seen that the points of concentration of strain are continuous along the central array part 30B (region X). Therefore, in the adhesion pattern C, the stress is increased in a linear manner along the central array part 30B; that is, along the extension direction L. Furthermore, in comparison of the examples, in Example 3, by extending the strain concentration point X linearly, the absolute value of the strain is greater than that of the adhesion patterns A and B of Examples 1 and 2. Therefore, in Example 3, it can be seen that the stress generated in the strain concentration region X is greater than that in Examples 1 and 2.

Conversely, in Example 3, the strain around the adhesion parts 20 configuring the left and right array parts 30A, 30C is smaller than in Example 2.

Regarding this concentration of stress, firstly, since the adhesion part 20 is more densely arranged in the central array part 30B than in the adjacent left and right array parts 30A, 30C, it is thought that, in the non-adhesion part provided between the dot-shaped adhesion parts 20, strain along the predetermined extension direction L becomes prominent, and the stress is increased. Furthermore, secondly, since the adhesion parts 20 of the central array part 30B are arranged at different positions in the predetermined extension direction L with respect to the adhesion parts 20 of the adjacent left and right array parts 30A, 30C, it is thought that the amount of extension of the non-adhesion parts of the left and right array parts 30A, 30C is limited by the increased stress in the central array part 30B. As a result, it can be seen that the adhesion pattern C according to Example 3 has a marked effect in effectively decreasing stretchability in a predetermined extension direction while also reducing the amount of adhesive used.

Based on the observation results of the respective examples described above, from the viewpoint of decreasing the stretchability of the fabric in the predetermined extension direction L with reducing the amount of the adhesive used, it is effective for the plural adhesion parts 20 to be arranged in a manner applying the following arrangement rules (1) and (2).
(1) In a predetermined array part 30 among the plural array parts 30 provided in plural rows, plural adhesion parts 20 are more densely arranged than in the other adjacent array parts 30.
(2) Further to the arrangement rule (1), in the predetermined array part 30, the positions of the adhesion parts 20 are arranged at different positions in the predetermined extension direction L with respect to the adhesion parts 20 of the other adjacent array parts 30.

### (Mechanism and Effects)

Next, the mechanism and effects of the bonded structure 10 according to the above embodiment will be described together with other variations of the adhesion pattern P according to the present embodiment.

In the layer-bonded structure 10 according to the present embodiment, the adhesion pattern P is configured by plural adhesion parts 20 in which an adhesive is formed in a dot shape. Furthermore, the plural adhesion parts 20 form an array part 30 arranged in a predetermined extension direction, and by providing plural rows of the array part 30, it has a band-like shape as a whole. When a tensile force along the predetermined extension direction L is exerted on the stretchable fabric 12 and the stretchable fabric 14, the stress in the predetermined extension direction L is increased by the band-shaped adhesion pattern P. As a result, the stretchability of the stretchable fabric 12 and the stretchable fabric 14 in the predetermined extension direction L can be decreased.

Here, in a non-sewn garment which is manufactured by adhering plural parts composed of a stretchable material using an adhesive, by appropriately arranging a design in which stretchability is decreased at an adhesion point at which parts are bonded to each other, this is effective for prevention of slippage at the time of wearing, optimization of joint motion range of the wearer, promotion of the training effect using the extension force of the clothes, prevention of collapse of the shape of the clothes, and improvement of the putting on and disrobing performance.

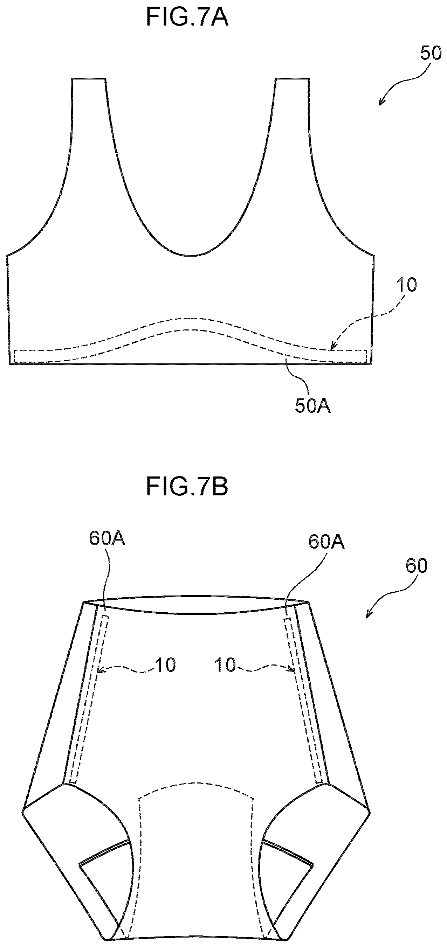

As an example, as shown in Fig. 7A, in the design of a training brassiere 50 produced using a stretchable material, the layer-bonded structure 10 according to the present embodiment can be applied to adhesion between fabrics arranged along an under bust 50A of a wearer. According to the illustrated example, the stretchability of the fabric at the under bust position during training can be suppressed, and the chest of the wearer can be stably supported.

Furthermore, as shown in Fig. 7B, in the design of innerwear shorts 60 manufactured using a stretchable material, the layer-bonded structure 10 according to the present embodiment can be applied to a fabric-to-fabric overlap part 60A provided at a position of the front body. According to the illustrated example, since the stretchability of the fabric can be decreased along a direction in which the fabric is pulled when worn, during repeated putting on/disrobing operations, the body fabric can be prevented from being deformed by application of excessive force, and the shorts can easily be raised and lowered, whereby the putting on/disrobing performance can be improved.

Furthermore, in the present embodiment, in the predetermined array part 30, the plural adhesion parts 20 of the adhesion pattern P are arranged in accordance with the arrangement rule (1) described above, whereby the effect of decreasing stretchability can be further improved.

In the arrangement rule (1), in the predetermined array part 30, the plural adhesion parts 20 are more densely arranged than in the other adjacent array parts 30, and as a result, the ratio of the adhesion area to the predetermined extension direction is set to be large. As shown in Example 3, when the plural adhesion parts 20 are densely arranged, in the layer-bonded structure 10, the stress is continuously increased along the extension direction of the array part 30. As a result, the overall amount of extension is further reduced.

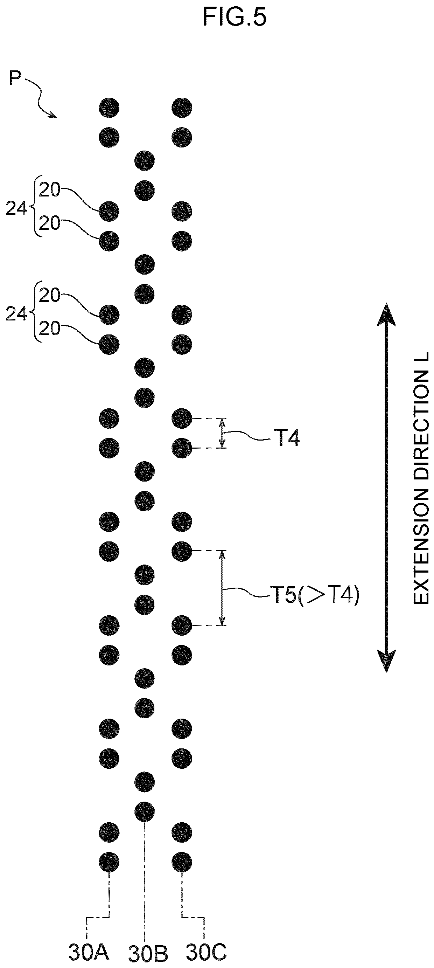

In addition, in the above aspect, the part in which the plural adhesion parts 20 are densely arranged may not be the entire adhesion pattern P. As shown in Fig. 5, a similar effect can be obtained when a congregated part 24 having a cluster is formed by making the distances of the plural adhesion parts 20 similar in the predetermined array part 30(A to C). In the illustrated example, in each of the three array parts 30, a congregated part 24 is formed in which the distance between two adhesion parts 20 is reduced to form one cluster. Furthermore, in each array part 30, the congregated part 24 is repeatedly provided along the predetermined extension direction L.

In each congregated part 24, plural (two in FIG. 5) adhesion parts 20 are arranged with an interval T4 therebetween. Furthermore, an interval T5 (>T4) is provided between the congregated parts 24. As a result, when the tensile force is exerted along the predetermined extension direction L, the stress is continuously increased along the congregated part 24, and the overall amount of extension is further reduced.

Note that, in the illustrated example, one congregated part 24 is configured by two adhesion parts 20, but the present invention is not limited thereto, and a congregated part may be configured by three or more adhesion parts.

Furthermore, in the adhesion pattern P, in the predetermined array part 30, the plural adhesion parts 20 are arranged in accordance with the arrangement rule (2) described above, whereby the effect of decreasing stretchability can be further increased.

In the arrangement rule (2), in a predetermined array part 30, the plural adhesion parts 20 configuring the array part 30 may be arranged so that their positions along the predetermined extension direction L are different with respect to the plural adhesion parts 20 configuring the other adjacent array parts 30. As a result, the stress increased by the part in which the adhesion parts 20 are densely arranged decreased the strain in the non-adhesion part of the adjacent array part 30, and as a whole, the amount of extension is limited. The adhesion pattern C of Example 3 and the adhesion pattern P of Fig. 5 are examples in which both of the arrangement rule (1) and the arrangement rule (2) are observed.

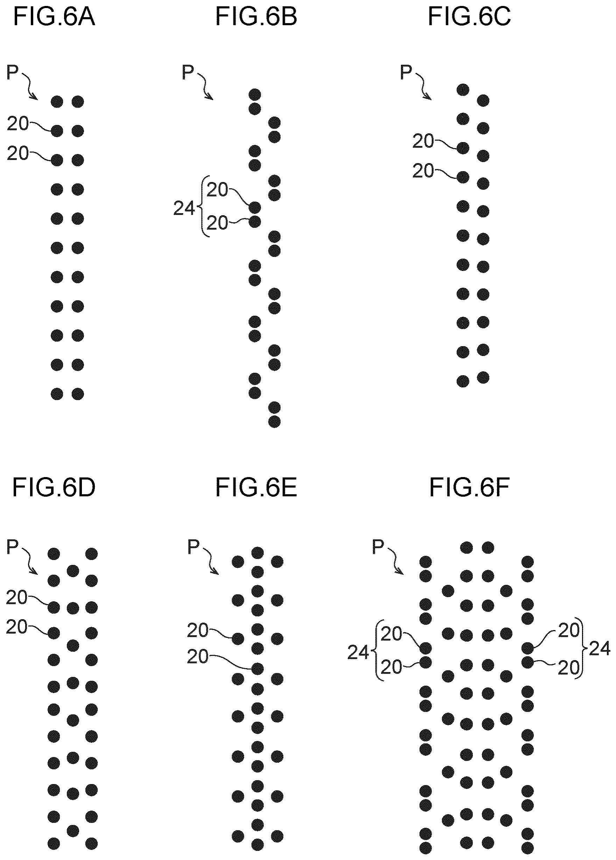

As a result, various adhesion patterns P can be designed by appropriately combining various arrangement methods of the adhesion part 20 described in the above embodiments. For example, as shown in Figs. 6A to 6C, the adhesion pattern P may be formed in a band shape using two array parts 30. Among these, the adhesion pattern P shown in Fig. 6B is an example in which both the arrangement rule (1) and the arrangement rule (2) described above are observed. Furthermore, the adhesion pattern P shown in Fig. 6C is an example in which the arrangement rule (2) described above is observed.

Furthermore, the adhesion patterns P shown in Figs. 6D to 6E are examples in which both the arrangement rule (1) and the arrangement rule (2) described above are observed. As shown in Fig. 6D, when the adhesion part 20 is densely arranged in the predetermined array part 30, the array part 30 may be provided at the end part of the band-shaped adhesion pattern P in the width direction, and as shown in Fig. 6E, the array part 30 may be provided at the center part in the width direction. Furthermore, as shown in Fig. 6F, the adhesion pattern P may have a configuration in which four or more array parts 30 are provided. In the illustrated example, the adhesion pattern P is configured by six array parts 30. This example is also an example in which both the arrangement rule (1) and the arrangement rule (2) described above are observed.

Note that while, in the above embodiment, a configuration has been described in which two stretchable fabrics 12, 14 are bonded together with an adhesive forming an adhesion pattern P, the present invention is not limited thereto. An adhesion pattern P may be formed on a folded part of the end part of one stretchable fabric configuring a single part or on an overlapping part of the fabrics, and the folded part or the overlapped part may be bonded.

The entire content of the disclosure of Japanese Patent Application No. 2023-020810 is incorporated by reference in the present specification.

All publications, patent applications and technical standards mentioned in the present specification are incorporated by reference in the present specification to the same extent as if each individual publication, patent application, or technical standard was specifically and individually indicated to be incorporated by reference.

### Description of Reference Numerals

- 10: Stretchable fabric layer-bonded structure
- 12: Stretchable fabric
- 14: Stretchable fabric
- P: Adhesion pattern
- 20: Adhesion part
- 24: Congregated part
- 30: Array part

## Claims

1. Layer-bonded structure of a stretchable material, comprising stretchable materials bonded together with an adhesion pattern formed by an adhesive, wherein:
the adhesion pattern comprises a plurality of adhesion parts in which the adhesive is formed in a dot shape, and
the plurality of adhesion parts form an array part arranged along a predetermined extension direction, and a plurality of rows of the array part are provided to form a band-shape as a whole.

2. The layer-bonded structure of the stretchable material of claim 1, wherein, in the adhesion pattern, in a predetermined array part among the plurality of rows of the array part, the plurality of adhesion parts are disposed more densely, and the ratio of an adhesion area with respect to the predetermined extension direction is larger, than in the other adjacent array parts.

3. The layer-bonded structure of the stretchable material of claim 1, wherein, in the adhesion pattern, a predetermined array part among the plurality of rows of the array part includes a congregated part having a cluster in which a distance between adhesion parts is reduced, and the congregated part is provided repetitively along the predetermined extension direction.

4. The layer-bonded structure of the stretchable material of claim 2 or claim 3, wherein, in the adhesion pattern, in the predetermined array part among the plurality of rows of the array part, the plurality of adhesion parts are disposed at different positions along the predetermined extension direction relative to the plurality of adhesion parts configuring the other adjacent array parts.

5. A garment provided with the layer-bonded structure of the stretchable material of any one of claims 1 to 4, the garment being configured by one or more parts comprising the stretchable material.

6. A method for layer-bonding of a stretchable material in which respective stretchable materials are bonded together with an adhesion pattern formed by an adhesive, the method comprising:
a step of applying the adhesive to at least one of the respective stretchable materials in an adhesion pattern; and
a step of affixing and adhering together the respective stretchable materials with the adhesion pattern, wherein:
the adhesion pattern comprises plural adhesion parts in which the adhesive is formed in a dot shape, and
the plural adhesion parts form an array part arranged along a predetermined extension direction, and plural rows of the array part are provided to form a band-shape.
